# EUROPÄISCHE PATENTANMELDUNG

(11) **EP 4 548 741 A1**
(43) Veröffentlichungstag der Anmeldung: **07.05.2025**
(21) Anmeldenummer: 24207449.0
(22) Anmeldetag: 18.10.2024
(51) Int. Cl.: A01D 34/00, A01D 78/00

(54) **VERFAHREN ZUR FELDBEARBEITUNG**

(30) Priorität: 03.11.2023 DE 102023130420
(71) Anmelder: Maschinenfabrik Bernard Krone GmbH & Co. KG, 48480 Spelle (DE)
(72) Erfinder: Johanning, Bernd, 49326 Melle (DE); Baiser, Andrej, 49076 Osnabrück (DE)

(57) **Zusammenfassung**

Die Erfindung betrifft Verfahren zur Feldbearbeitung, wobei eine Mähmaschine (10) innerhalb eines Bearbeitungsbereichs (1) Erntegut mittels wenigstens eines Mähwerks (15) mäht (S110), wobei für jede Position (P₁-P_{N}) einer Mehrzahl von Positionen (P₁-P_{N}) innerhalb des Bearbeitungsbereichs (1) wenigstens ein Mähparameter (A, M_{M}, n_{M}, v_{M}) ermittelt wird (S120), wobei wenigstens ein Mähparameter (A, M_{M}, n_{M}, v_{M}) ein Mähwerk-Parameter (A, M_{M}, n_{M}) ist, der wenigstens ein Mähwerk (15) betrifft und der im Zusammenhang mit einer Flächendichte (D) des Erntegutes steht. Um eine verbesserte, situationsgemäße Einstellung einer Werbemaschine zu ermöglichen, ist erfindungsgemäß vorgesehen, dass eine Werbemaschine (30) das gemähte Erntegut zeitlich nachfolgend mit wenigstens einem Bearbeitungsorgan (38) bearbeitet (S210), wobei wenigstens ein Werbeparameter (R, n_{W}, v_{W}), der den Betrieb der Werbemaschine charakterisiert, in Abhängigkeit von einer Position (P₁-P_{N}) der Werbemaschine (30) und dem für diese Position (P₁-P_{N}) ermittelten wenigstens einen Mähparameter (A, M_{M}, n_{M}, v_{M}) eingestellt wird (S240).

## Beschreibung

Die vorliegende Erfindung betrifft ein Verfahren zur Feldbearbeitung, nach dem Oberbegriff von Anspruch 1.

Halmgut wie zum Beispiel Gras wird üblicherweise in mehreren Schritten geerntet und verarbeitet. Zunächst erfolgt ein Mähen des Halmguts mit einer Mähmaschine, die auch eine Aufbereitung vornehmen kann, durch welche eine feuchtigkeitsisolierende Wachsschicht der Pflanzenteile teilweise entfernt oder aufgebrochen wird. Danach erfolgt typischerweise eine Bearbeitung mit einer Werbemaschine, zum Beispiel einem Zetter oder Schwader, wobei das Halmgut auf dem Feld verbleibt, aber umgelagert und/oder gewendet wird. Es kann einerseits zur besseren Trocknung auf dem Feld verteilt werden, andererseits ist es möglich, das verteilte Halmgut zu einem Schad zusammenzulegen, um es für eine spätere Aufnahme vorzubereiten. Schließlich kann das Halmgut aufgenommen und beispielsweise zu Erntegutballen verarbeitet werden.

Grundsätzlich kann Halmgut oder anderes Erntegut in unterschiedlicher Flächendichte vorliegen, das heißt es kann eine unterschiedlich große Masse an Erntegut pro Flächeneinheit vorliegen. Dies hängt von unterschiedlichen Faktoren ab, zum Beispiel der oder den enthaltenen Pflanzenarten, vom mittleren Abstand der einzelnen Pflanzen untereinander, von ihrer Größe, von einem witterungsabhängigen Feuchtegehalt und anderen Faktoren. Man kann dabei grob zwischen "leichtem" und "schwerem" Erntegut unterscheiden. Je nach Flächendichte sind unterschiedliche Einstellungen der eingesetzten Landmaschinen vorteilhaft. Dies betrifft zum Beispiel die Werbemaschine, deren Bearbeitungsorgane bei jedem Kontakt mit dem Erntegut eine umso größere Masse bewegen müssen, je größer die Flächendichte ist, wenn alle sonstigen Betriebsparameter beibehalten werden. Man kann dies zum einen durch eine geringere Fahrgeschwindigkeit mildern, was allerdings aus Gründen der Zeitersparnis nur in Grenzen sinnvoll ist. Zum anderen kann die Antriebsgeschwindigkeit der Bearbeitungsorgane erhöht werden. Um die entsprechenden Einstellungen vornehmen zu können, wäre es vorteilhaft, die Flächendichte vorab zu kennen. Abgesehen von einer groben Einschätzung liegen hierzu aber oftmals keine Erkenntnisse vor, zumal sich die Flächendichte innerhalb eines Flurstücks lokal unterscheiden kann.

Aufgabe der Erfindung ist es, eine verbesserte, situationsgemäße Einstellung einer Werbemaschine zu ermöglichen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren zur Feldbearbeitung geschaffen, wobei eine Mähmaschine innerhalb eines Bearbeitungsbereichs Erntegut mittels wenigstens eines Mähwerks mäht, wobei für jede Position einer Mehrzahl von Positionen innerhalb des Bearbeitungsbereichs wenigstens ein Mähparameter ermittelt wird, wobei wenigstens ein Mähparameter ein Mähwerk-Parameter ist, der wenigstens ein Mähwerk betrifft und der im Zusammenhang mit einer Flächendichte des Erntegutes steht.

Bei dem Bearbeitungsbereich kann es sich zum Beispiel um ein Feld, eine Wiese oder dergleichen handeln. Es kann sich um ein Flurstück oder einen Teil eines Flurstücks handeln. Allgemein ist dies der Bereich, in dem das erfindungsgemäße Verfahren durchgeführt wird.

Bei der Mähmaschine kann es sich um jede Art von Landmaschine handeln, die zum Mähen von Erntegut eingerichtet ist. Dies schließt ausdrücklich auch Landmaschinen ein, an welche unterschiedliche Anbaugeräte ankoppelbar sind, wobei wenigstens ein Mähwerk als solches Anbaugerät ausgebildet ist. Das heißt der eigentliche Fahrzeugkörper der Landmaschine muss nicht explizit zum Mähen eingerichtet sein. Die Mähmaschine kann einen eigenen Antrieb aufweisen, insbesondere einen eigenen Fahrantrieb. Alternativ kann sie zur Einkopplung einer externen Antriebsleistung eingerichtet sein. Auch kann die Landmaschine zwar ein eigenes Fahrwerk aufweisen, aber keinen Fahrantrieb, so dass sie von einem Schlepper gezogen werden muss. Im Sinne der vorliegenden Erfindung kann allerdings auch das Gespann einschließlich des Schleppers in seiner Gesamtheit als "Mähmaschine" aufgefasst werden. Die Mähmaschine weist wenigstens ein Mähwerk auf, gegebenenfalls auch eine Mehrzahl von Mähwerken. Mit jedem Mähwerk wird Erntegut gemäht, das heißt es wird Erntegut aus einem Bestand geschnitten. Der Begriff "Schneiden" ist in diesem Zusammenhang breit auszulegen und impliziert nicht zwangsläufig, dass eine Klinge auf das Erntegut einwirkt. Vielmehr ist hiermit allgemein das Abtrennen eines Teils, normalerweise des überwiegenden Teils der Pflanze gemeint, während ein Teil einschließlich der Wurzel typischerweise stehen gelassen wird. Die Mähmaschine mäht also das Erntegut, wobei das gemähte Erntegut auf dem Boden liegenbleibt.

Für jede Position einer Mehrzahl von Positionen innerhalb des Bearbeitungsbereichs wird wenigstens ein Mähparameter ermittelt. Die jeweilige Position ist eine Position wenigstens eines Teils der Mähmaschine, zum Beispiel die Position eines Mähwerks, welche während des Mähens zeitweise eingenommen wird. Die Position kann mit unterschiedlicher Genauigkeit bestimmt und angegeben werden. Je nach Ausführungsform des Verfahrens kann die Genauigkeit zwischen wenigen Zentimetern und wenigen Metern liegen. Typischerweise kann es sich um eine zweidimensionale Positionsangabe handeln, es könnte aber auch eine dritte Dimension einbezogen werden. Es wird eine Mehrzahl von Positionen einbezogen. Zwei Positionen können jeweils klar beabstandet sein, es wäre aber auch denkbar, dass eine Mehrzahl von Positionen quasi-kontinuierlich ineinander übergehen. Für jede der Mähpositionen wird wenigstens ein Mähparameter ermittelt. Der ermittelte Mähparameter kann insbesondere zusammen mit der zugehörigen Position abgespeichert werden. Es ist ausdrücklich auch möglich, einen Mähparameter für eine Position durch Interpolation zwischen benachbarten Positionen zu ermitteln, für welche der Mähparameter bekannt ist.

Die Ermittlung des jeweiligen Mähparameters kann insbesondere wenigstens teilweise durch die Mähmaschine erfolgen. ZUM BEISPIEL kann die Mähmaschine einen Wert messen, der entweder selbst ein Mähparameter ist oder auf dem ein Mähparameter basiert. So kann ein Mähparameter aus ein oder mehreren Messwerten ermittelt werden, zum Beispiel durch Berechnung oder mittels einer Nachschlagetabelle. Die Ermittlung kann aber wenigstens teilweise auch außerhalb der Mähmaschine erfolgen, zum Beispiel indem wenigstens ein Messwert drahtlos oder drahtgebunden an eine externe Auswertungseinheit übermittelt wird, die dann den Mähparameter ermittelt. Allgemein kann ein Mähparameter im Zusammenhang mit dem Betrieb und/oder dem Zustand der Mähmaschine stehen und/oder diese beschreiben. Dabei ist wenigstens ein Mähparameter ein Mähwerk-Parameter, der wenigstens ein Mähwerk betrifft und der im Zusammenhang mit einer Flächendichte des Erntegutes steht. Der Mähwerk-Parameter betrifft das jeweilige Mähwerk und kann mit dem Betrieb und/oder dem Zustand des Mähwerks in Zusammenhang stehen und/oder diese beschreiben. Sofern der Mähwerk-Parameter durch Messung ermittelt wird, erfolgt diese Messung bevorzugt am Mähwerk.

Der Mähwerk-Parameter steht in Zusammenhang mit der Flächendichte des Ernteguts. Die Flächendichte ist in diesem Kontext bevorzugt definiert als Quotient aus Masse des Ernteguts und Fläche, auf der das Erntegut steht. Diese Flächendichte ist im Allgemeinen nicht konstant, sondern abhängig von der Position. Ein Erntegut mit hoher Flächendichte wird auch als "schweres Erntegut" bezeichnet, während eines mit geringer Flächendichte als "leichtes Erntegut" bezeichnet wird. Bei vorgegebener Fahrgeschwindigkeit der Mähmaschine führt eine hohe Flächendichte zu einem hohen Massendurchsatz des gemähten Erntegutes durch das Mähwerk, während eine geringe Flächendichte zu einem geringen Massendurchsatz führt. Die Flächendichte kann von verschiedenen Faktoren abhängen, die innerhalb des Bearbeitungsbereichs variieren können, zum Beispiel der Art und Größe einzelner Pflanzen, ihrem Abstand zueinander sowie ihrem Feuchtegehalt. Man kann sagen, dass der Mähwerk-Parameter zumindest anteilig durch die Flächendichte beeinflusst wird. Es ist allerdings möglich, dass auch andere Größen Einfluss auf den Mähwerk-Parameter haben. Soweit ein Einfluss anderer Größen entweder mit berücksichtigt wird oder aber außer Acht gelassen werden kann, zum Beispiel da sich andere Größen nicht ändern, kann somit aus dem Mähwerk-Parameter auf die Flächendichte geschlossen werden. Das heißt die Flächendichte kann somit implizit bekannt sein.

Erfindungsgemäß bearbeitet eine Werbemaschine das gemähte Erntegut zeitlich nachfolgend mit wenigstens einem Bearbeitungsorgan, wobei wenigstens ein Werbeparameter, der den Betrieb der Werbemaschine charakterisiert, in Abhängigkeit von einer Position der Werbemaschine und dem für diese Position ermittelten wenigstens einen Mähparameter eingestellt wird.

Die Werbemaschine ist dazu ausgebildet, am Boden liegendes Erntegut, insbesondere Halmgut wie Gras oder Heu, mittels wenigstens einem Bearbeitungsorgan bearbeiten. Dabei wird das Erntegut erfasst, bewegt und wieder abgelegt, wobei sich allgemein die Position eines bestimmten Stückes von Erntegut ändert. Hierbei kann das Erntegut gewendet und/oder verteilt werden. Es ist aber auch möglich, dass die Werbemaschine das Erntegut zu einem Schwad zusammenlegt. Die Werbemaschine kann insbesondere als Wender, Zetter oder Schwader ausgebildet sein. Das wenigstens eine Bearbeitungsorgan ist entweder direkt oder indirekt mit einem Rahmen der Werbemaschine verbunden. Es bildet denjenigen Teil der Werbemaschine, der aktiv mit dem Erntegut zusammenwirkt. Es ist bevorzugt beweglich am Rahmen angeordnet und kann insbesondere relativ zum Rahmen antreibbar sein. Die Werbemaschine kann ein eigenes Fahrwerk aufweisen sowie einen eigenen Fahrantrieb. Sie kann aber auch beispielsweise ohne eigenen Fahrantrieb ausgebildet sein und von einem Schlepper gezogen werden. Auch könnte sie evtl. als Anbaugerät von einem Schlepper getragen werden. Man kann allerdings auch den Schlepper einschließlich des Anbaugeräts oder das Gespann aus Schlepper und gezogener Maschine insgesamt als "Werbemaschine" ansehen. "Zeitlich nachfolgend" bedeutet, dass die Bearbeitung (also die Werbung) des Ernteguts durch die Werbemaschine zeitlich nach dem Mähen des Ernteguts geschieht. Dies könnte unmittelbar nach dem Mähen sein, wobei die Werbemaschine der Mähmaschine in gewissem Abstand nachfolgt. Es könnte aber auch Stunden oder Tage nach dem Mähen erfolgen.

Der wenigstens eine Werbeparameter charakterisiert den Betrieb der Werbemaschine. Man kann auch sagen, durch den jeweiligen Werbeparameter ist zumindest ein Aspekt des Betriebs der Werbemaschine beschreibbar. Man kann ihn auch als Betriebsparameter der Werbemaschine bezeichnen. Dieser Werbeparameter kann einer einstellbaren Betriebsgröße entsprechen, er kann aber auch aus einer Mehrzahl solcher Betriebsgrößen zusammengesetzt sein, zum Beispiel als deren Produkt, Quotient, Summe oder Differenz. Der Werbeparameter wird im Allgemeinen nicht konstant gehalten, sondern er wird in Abhängigkeit von einer Position der Werbemaschine und dem für diese Position ermittelten wenigstens einen Mähparameter eingestellt. Sofern der Werbeparameter aus mehreren Betriebsgrößen zusammengesetzt ist, kann dies eine Einstellung einer oder mehrerer Betriebsgrößen beinhalten. Man kann sagen, dass der Werbeparameter positionsabhängig eingestellt wird. Die aktuelle Position der Werbemaschine wird ermittelt und es wird der wenigstens eine Mähparameter, der für diese Position ermittelt wurde, herangezogen, um den wenigstens einen Werbeparameter einzustellen. Dabei wird ausgenutzt, dass wenigstens ein Mähparameter ein Mähwerk-Parameter ist, welcher wie oben geschildert, wenigstens teilweise von der Flächendichte abhängt. Unter Umständen kann dies auch für einen Mähparameter gelten, der kein Mähwerk-Parameter ist. Es daher kann zumindest unter gewissen Bedingungen ein Rückschluss auf die Flächendichte gezogen werden. Die optimale Einstellung der Werbemaschine, repräsentiert durch den wenigstens einen Werbeparameter, hängt wiederum allgemein von der Flächendichte ab. Daher kann - unabhängig davon, ob tatsächlich eine Flächendichte ermittelt wird - eine Einstellung des wenigstens einen Werbeparameters positionsabhängig und in Abhängigkeit von dem wenigstens einen Mähparameter erfolgen, um den Werbeprozess zu optimieren.

Der Begriff "Parameter", also zum Beispiel "Werbeparameter" oder "Mähparameter", bezieht sich hier und im Folgenden insbesondere auf einen einfachen Zahlenwert, der gegebenenfalls mit einer Einheit wie Newton, Watt oder dergleichen assoziiert ist. Allgemeiner könnte ein Parameter aber auch zum Beispiel eine mehrdimensionale Größe sein, zum Beispiel ein Vektor oder eine Matrix.

Bevorzugt steht wenigstens ein Werbeparameter in Zusammenhang mit einer Antriebsgeschwindigkeit eines Bearbeitungsorgans und/oder einer Werbe-Fahrgeschwindigkeit der Werbemaschine. Dies schließt die Möglichkeit ein, dass der Werbeparameter mit der Antriebsgeschwindigkeit oder mit der Werbe-Fahrgeschwindigkeit identisch ist. Es kann sich aber auch um einen Werbeparameter handeln, der sich aus einer der genannten Größen oder aus beiden berechnen lässt. In diesem Zusammenhang bezieht sich "Fahrgeschwindigkeit" auf die Bewegungsgeschwindigkeit gegenüber dem Boden, welche im Falle einer gezogenen oder getragenen Werbemaschine der Geschwindigkeit des Schleppers entspricht. "Antriebsgeschwindigkeit" bezieht sich auf jede Größe, die beschreibt, wie schnell sich das Bearbeitungsorgan relativ zum Rahmen der Werbemaschine bewegt oder wie schnell es angetrieben wird. Dies könnte zum Beispiel eine Geschwindigkeit, eine Winkelgeschwindigkeit, eine Frequenz oder eine Drehzahl sein.

Besonders bevorzugt entspricht ein Werbeparameter einem Verhältnis zwischen der Antriebsgeschwindigkeit eines Bearbeitungsorgans und der Werbe-Fahrgeschwindigkeit. Das Verhältnis kann auch durch einen Quotienten ausgedrückt werden. Dieses Verhältnis kann insbesondere zur Anpassung an unterschiedliche Flächendichten eingesetzt werden. Die Fahrgeschwindigkeit bestimmt, wie viel Fläche pro Zeiteinheit die Werbemaschine bearbeitet. Die Flächendichte wiederum bestimmt, wieviel Masse an Erntegut pro Flächeneinheit zu bearbeiten ist. Wenngleich es nicht möglich ist, diesbezüglich einen allgemeingültigen optimalen Wert oder Grenzwert anzugeben, ist es typischerweise bevorzugt, wenn die Werbemaschine weder zu viel noch zu wenig Masse pro Zeiteinheit bearbeitet. Diese Überlegung gilt auch für die Masse an Erntegut, die das Bearbeitungsorgan bei jedem Kontakt mit dem Erntegut zu bewegen hat. Zum einen führt eine Erhöhung (oder Verringerung) der Werbe-Fahrgeschwindigkeit bei einer bestimmten Antriebsgeschwindigkeit des Bearbeitungsorgans dazu, dass das Bearbeitungsorgan bei jedem Kontakt mit dem Erntegut eine größere (oder kleinere) Masse bewegen muss. Zum anderen führt eine Erhöhung (oder Verringerung) der Antriebsgeschwindigkeit bei einer bestimmten Werbe-Fahrgeschwindigkeit dazu, dass das Bearbeitungsorgan bei jedem Kontakt eine kleinere (oder größere) Masse bewegen muss. Daher kann der Werbeprozess innerhalb gewisser Grenzen optimiert werden, indem das Verhältnis zwischen Antriebsgeschwindigkeit und Werbe-Fahrgeschwindigkeit an die Flächendichte angepasst wird. Dies geschieht bei dieser Ausführungsform gewissermaßen indirekt durch die Anpassung des Verhältnisses an den wenigstens einen Mähparameter.

Grundsätzlich können unterschiedliche Arten von Werbemaschinen beim erfindungsgemäßen Verfahren eingesetzt werden, beispielsweise Kreiselzetter, Trommelwender, Kettenrechwender, Sternradschwader, Kammschwader, Bandschwader oder dergleichen. Bevorzugt weist die Werbemaschine als Bearbeitungsorgan wenigstens einen Rechkreisel auf, welcher mit einer Kreiseldrehzahl als Antriebsgeschwindigkeit betrieben wird. Beispielsweise kann es sich in diesem Fall um einen Kreiselzetter oder Kreiselschwader handeln. Vorteilhaft sind wenigstens zwei Rechkreisel vorgesehen. Der grundsätzliche Aufbau und die Funktionsweise eines Kreiselzetters oder Kreiselschwaders sind bekannt und werden daher nicht im Detail diskutiert. Jeder Rechkreisel bildet ein Bearbeitungsorgan, welches über eine Mehrzahl von Zinkenarmen mit dem Erntegut zusammenwirkt. Im Fall eines Kreiselschwaders können zwei Rechkreisel, die gegenläufig angetrieben werden, können das Erntegut in einem Ablagebereich ablegen, der wenigstens teilweise zwischen ihnen angeordnet ist. Die Bewegung eines Rechkreisels lässt sich vollständig durch eine Kreiseldrehzahl charakterisieren. Diese korrespondiert selbstverständlich mit einer Winkelgeschwindigkeit des Rechkreisels. In Kombination mit der oben genannten Ausführungsform ist es möglich, ein Verhältnis zwischen Kreiseldrehzahl und Werbe-Fahrgeschwindigkeit an den oder die positionsabhängigen Mähparameter anzupassen.

Eine Ausgestaltung sieht vor, dass zusätzlich zu dem wenigstens einen Mähwerk-Parameter eine Mähmaschinen-Fahrgeschwindigkeit der Mähmaschine als Mähparameter ermittelt wird und der wenigstens eine Werbeparameter in Abhängigkeit von der für die jeweilige Position ermittelten Mähmaschinen-Fahrgeschwindigkeit ermittelt wird. Dem liegt die Überlegung zugrunde, dass der Massendurchsatz, also die Masse an Erntegut, die pro Zeiteinheit vom Mähwerk bearbeitet wird, zum einen von der Flächendichte abhängt, zum anderen allerdings auch von der Mähmaschinen-Fahrgeschwindigkeit. Bei höherer Mähmaschinen-Fahrgeschwindigkeit bearbeitet die Mähmaschine eine größere Fläche pro Zeiteinheit, was bei einem Rückschluss auf die Flächendichte berücksichtigt werden sollte. Eine Berücksichtigung der Mähmaschinen-Fahrgeschwindigkeit kann allenfalls dann unterbleiben, wenn diese als nahezu konstant innerhalb des gesamten Bearbeitungsbereichs angenommen werden kann. Bei einem typischen Bearbeitungsvorgang ist dies allerdings unrealistisch. Sofern man einen Mähwerk-Parameter ermittelt, der eine Aussage über den Massendurchsatz erlaubt, kann dieser durch die Mähmaschinen-Fahrgeschwindigkeit geteilt werden, um ein Maß für die Flächendichte zu erhalten.

Sofern die Werbemaschine den Bearbeitungsbereich kurz nach der Mähmaschine abfährt, kann man davon ausgehen, dass sich das Erntegut zwischenzeitlich nicht wesentlich verändert hat. Je nach Art des Ernteguts ist in diesem Fall allenfalls damit zu rechnen, dass Teile des Erntegut zwar von der Mähmaschine erfasst werden, allerdings nicht von der Werbemaschine. Hierbei kann es sich beispielsweise um Pflanzenteile handeln, die dicht am Boden liegen und nicht erfasst werden können. Hiervon abgesehen ist es vorteilhaft, wenn bei der Bestimmung des Werbeparameters ein zwischen dem Mähen und dem Werben erfolgter Trocknungsprozess berücksichtigt wird. Dies gilt insbesondere dann, wenn zwischen Mähen und Werben ein größerer Zeitraum liegt, zum Beispiel wenigstens ein Tag. Der Trocknungsprozess führt insbesondere dazu, dass das Erntegut an Masse verliert. Somit verringert sich die Flächendichte beim Werbeprozess gegenüber dem Mähvorgang. Dies kann bei der Einstellung des jeweiligen Werbeparameters berücksichtigt werden. Bei der Berücksichtigung des Trocknungsprozesses können insbesondere auch den Bearbeitungsbereich betreffende Wetterdaten einbezogen werden.

Eine besonders bevorzugte Ausführungsform sieht vor, dass wenigstens ein Mähwerk mit einer Mäheinheit das Erntegut mäht, es mit einem Aufbereiter aufbereitet und nach der Aufbereitung wieder ablegt, wobei der wenigstens eine Mähwerk-Parameter den Aufbereiter betrifft. Die Mäheinheit kann beispielsweise als Mähbalken ausgebildet sein, welcher zum Beispiel nach dem Scherenschnittprinzip das Erntegut schneiden kann, oder mittels rotierender Mähscheiben. Es sind auch andere, im Stand der Technik bekannte Funktionsprinzipien denkbar. Das Erntegut wird nach dem Abschneiden nicht unmittelbar wieder abgelegt, sondern zunächst an den Aufbereiter übergeben. Dieser Aufbereiter, welcher auch als Konditionierer bezeichnet werden kann, kann das Erntegut insbesondere quetschen und/oder knicken, um eine Wachsschicht zu beschädigen, die einen Feuchtigkeitsaustausch zwischen dem Erntegut und dessen Umgebung behindert. Bei trockenen Witterungsverhältnissen kann das aufbereitete Erntegut daher schneller trocknen. Ohne hierauf beschränkt zu sein, kann der Aufbereiter eine Mehrzahl von Walzen aufweisen, zwischen denen das Erntegut gequetscht wird, oder einen drehend antreibbaren Rotor, der das Erntegut gegen einen feststehenden Kamm schleudert. Dieser Ausführungsform liegt die Überlegung zugrunde, dass die Arbeit der Mäheinheit weitgehend unabhängig davon ist, wie groß und massiv die einzelne Pflanze ist, sondern hauptsächlich davon, wie viele Pflanzen pro Zeiteinheit geschnitten werden. Dies erlaubt allenfalls bedingt Rückschlüsse auf die Flächendichte. Der Aufbereiter hingegen interagiert mit der abgetrennten Pflanze (bzw. dem abgetrennten Teil der Pflanze) insgesamt. Daher steht die Aufbereitung in einem engeren Verhältnis zur Flächendichte.

Es wird in diesem Zusammenhang als eigenständige Erfindung angesehen, ein Verfahren nach dem Oberbegriff von Anspruch 1 zur Verfügung zu stellen, bei welchem wenigstens ein Mähwerk mit einer Mäheinheit das Erntegut mäht, es mit einem Aufbereiter aufbereitet und nach der Aufbereitung wieder ablegt, wobei der wenigstens eine Mähwerk-Parameter den Aufbereiter betrifft.

Bevorzugt steht wenigstens ein Mähwerk-Parameter in Zusammenhang mit einer Leistungsaufnahme des Aufbereiters, wobei bevorzugt zur Bestimmung dieses Mähwerk-Parameters ein Drehmoment einer Antriebswelle des Aufbereiters gemessen wird. Der jeweilige Mähwerk-Parameter kann dabei der Leistungsaufnahme entsprechen, es ist aber auch möglich, dass die Leistungsaufnahme von diesem Mähwerk-Parameter abhängt, zum Beispiel im Zusammenspiel mit weiteren Parametern. Es ist leicht einsichtig, dass die Leistungsaufnahme des Aufbereiters mit der Flächendichte zusammenhängt. Insbesondere kann sie, für eine vorgegebene Mähmaschinen-Fahrgeschwindigkeit, proportional zur Flächendichte sein. Es sind allerdings auch andere, kompliziertere Zusammenhänge möglich. Typischerweise kann davon ausgegangen werden, dass die Leistungsaufnahme eine monoton wachsende Funktion der pro Zeiteinheit durch den Aufbereiter laufenden Erntegutmasse ist. Die Leistungsaufnahme kann in unterschiedlicher Weise gemessen werden. Bei einigen Mähwerken wird die Antriebsleistung über eine Antriebswelle in den Aufbereiter eingekoppelt. In diesem Fall ergibt sich die Leistungsaufnahme aus dem Produkt von Drehzahl der Antriebswelle und dem darin wirkenden Drehmoment. Daher ist es zur Bestimmung der Antriebsleistung sinnvoll, das Drehmoment in der Antriebswelle zu messen, welches auch als Aufbereiter-Drehmoment bezeichnet werden kann. Dies kann mittels einer beliebigen Messtechnik erfolgen, zum Beispiel mittels eines Drehmomentsensors, der der Antriebswelle zugeordnet ist.

Insbesondere bei der oben genannten Ausführungsform, allerdings nicht nur im Zusammenhang mit dieser, ist es bevorzugt, dass zur Bestimmung eines Mähwerk-Parameters eine Antriebsgeschwindigkeit des Aufbereiters erfasst wird. Auch hier kann sich "Antriebsgeschwindigkeit" auf jede Größe beziehen, die beschreibt, wie schnell der Aufbereiter angetrieben wird oder wie schnell sich dessen bewegliche Komponenten relativ zu einem Rahmen des Mähwerks bewegen. Dies könnte zum Beispiel eine Geschwindigkeit, eine Winkelgeschwindigkeit, eine Frequenz oder eine Drehzahl sein. Insbesondere kann dabei eine Drehzahl erfasst werden, zum Beispiel die Drehzahl der oben genannten Antriebswelle oder die Drehzahl einer nachfolgend erwähnten Aufbereiterwelle. Es liegt auf der Hand, dass eine höhere Antriebsgeschwindigkeit qualitativ bewirkt, dass sich zu einem bestimmten Zeitpunkt jeweils weniger Erntegut im Aufbereiter befindet, da das Erntegut schneller durch den Aufbereiter hindurchgeführt wird.

Eine bevorzugte Ausführungsform sieht vor, dass zur Bestimmung eines Mähwerk-Parameters eine Vibrationsbewegung wenigstens eines Elements des Aufbereiters sensorisch erfasst wird. Die Vibrationsbewegung ist allgemein eine oszillierende Bewegung, wobei insbesondere eine translatorisch oszillierende Bewegung erfasst werden kann, wenngleich auch eine Drehschwingung berücksichtigt werden könnte. Die oszillierende Bewegung beinhaltet im Regelfall unterschiedliche Frequenzen, lässt sich also durch ein Frequenzspektrum charakterisieren. Es ist bei dieser Ausführungsform möglich, dass nur ein Teil des Frequenzspektrums betrachtet wird. Frequenzen, die als irrelevant angesehen werden, könnten beispielsweise mittels eines Bandfilters entfernt werden. Die grundsätzliche Überlegung bei dieser Ausführungsform ist, dass die Vibrationsbewegung zumindest teilweise auf einer Wechselwirkung zwischen dem Aufbereiter und dem bearbeiteten Erntegut beruht. Der Massendurchsatz, also die Masse an Erntegut, die pro Zeiteinheit den Aufbereiter durchläuft, ebenso wie die Dichte des Erntegutstroms (also die Menge an Erntegut, die sich in einem bestimmten Moment im Aufbereiter befindet) können daher die Vibrationsbewegung beeinflussen, insbesondere deren Amplitude. Namentlich lässt sich in vielen Fällen feststellen, dass bei einem höheren Massendurchsatz die Intensität der Wechselwirkung zunimmt und somit auch zumindest in einigen Frequenzbereichen eine stärkere Vibrationsbewegung erfolgt. Es lässt sich, zum Beispiel in Kombination mit der Antriebsgeschwindigkeit des Aufbereiters sowie der Mähmaschinen-Fahrgeschwindigkeit, aus der erfassten Vibrationsbewegung auf die Flächendichte schließen. Der genaue Zusammenhang ist von vielen Faktoren abhängig und kann insbesondere von der Bauart des Aufbereiters abhängen. Er lässt sich allerdings für einen bestimmten Typ von Aufbereiter zum Beispiel durch eine Messreihe anhand von bekannten Flächendichten experimentell ermitteln.

Es wäre beispielsweise möglich, die Vibrationsbewegung über einen Positionssensor zu erfassen, der die zeitlich veränderliche Position eines Elements des Aufbereiters detektiert. Es ist allerdings bevorzugt, dass ein Mähwerk-Parameter wenigstens teilweise basierend auf einer der Vibrationsbewegung zugeordneten Beschleunigung bestimmt wird. Die oszillierende Vibrationsbewegung lässt sich zum einen durch die zeitlich veränderliche Position beschreiben, darüber hinaus aber auch durch eine zeitlich veränderliche Geschwindigkeit (also die erste zeitliche Ableitung der Position) sowie eine zeitlich veränderliche Beschleunigung (also die zweite zeitliche Ableitung der Position). Diese Beschleunigung, welche der Vibrationsbewegung zugeordnet ist, kann durch im Stand der Technik bekannte Beschleunigungssensoren erfasst werden, insbesondere durch Sensoren, deren Messprinzip auf der Erfassung einer Trägheitskraft beruht.

Vorteilhaft wird die Beschleunigung im Bereich eines Lagers einer drehbar angetriebenen Aufbereiterwelle gemessen. Die Aufbereiterwelle ist ein bewegliches Teil des Aufbereiters, welches wenigstens indirekt an die oben genannte Antriebswelle gekoppelt sein kann. Gemäß einem Aufbau wird die Antriebskraft auf einer Seite der Aufbereiterwelle eingekoppelt, während die Aufbereiterwelle auf der gegenüberliegenden Seite gewissermaßen passiv gelagert ist. Insgesamt ist die Aufbereiterwelle um eine Wellenachse drehbar an einem Rahmen des Mähwerks gelagert. Im Bereich eines der Lager kann die Beschleunigung gemessen werden. Dabei kann die Beschleunigung der Aufbereiterwelle selbst oder die Beschleunigung hierzu benachbarter Bereiche des Rahmens erfasst werden, zum Beispiel eines feststehenden Teils des Lagers. Es wäre denkbar, die Beschleunigung in axialer Richtung bezüglich der Wellenachse zu messen. Allerdings ist es bevorzugt, dass die Beschleunigung senkrecht zu einer Wellenachse der Aufbereiterwelle gemessen wird. Man kann zumindest in einigen Ausführungsformen auch sagen, dass eine bezüglich der Wellenachse radiale Beschleunigung erfasst wird.

Vorteilhaft wird wenigstens ein Mähwerk-Parameter basierend auf einer zeitlichen Mittelung bestimmt. Das heißt es wird kein momentaner Wert betrachtet, sondern es wird ein gewisses Zeitintervall betrachtet, innerhalb dessen ein Wert gemittelt wird. Das jeweilige Zeitintervall sollte in der Regel so kurz sein, dass sich die Position der Mähmaschine währenddessen nicht zu stark ändert. Dabei sind unterschiedliche Arten der Mittelung möglich. Insbesondere kann ein Mähwerk-Parameter einem zeitlich gemittelten Absolutbetrag der Beschleunigung entsprechen, wobei man auch von einem Absolutmittelwert sprechen kann. Das heißt es wird für ein bestimmtes Zeitintervall nicht die vorzeichenbehaftete Beschleunigung betrachtet, sondern ihr Absolutbetrag, welcher per Definition nicht-negativ ist. Dieser Absolutbetrag wird zeitlich gemittelt, zum Beispiel indem er über das Zeitintervall integriert wird und der integrierte Wert durch die Länge des Zeitintervalls geteilt wird. Der genaue Zusammenhang zwischen dem gemittelten Absolutbetrag und der Flächendichte kann wiederum experimentell für den jeweiligen Typ von Mähmaschine oder den jeweiligen Typ von Aufbereiter bestimmt werden. Dabei kann wiederum eine Abhängigkeit von der Antriebsgeschwindigkeit des Aufbereiters berücksichtigt werden.

Vorteilhaft kann der wenigstens eine Mähparameter genutzt werden, um eine positionsabhängige Flächendichte des Ernteguts innerhalb des Bearbeitungsbereichs zu bestimmen. Für die positionsabhängige Einstellung des wenigstens einen Werbeparameters ist es nicht notwendig, explizit die Flächendichte zu bestimmen, wenngleich dies ein möglicher Zwischenschritt ist. Aus anderen Gründen kann es allerdings wünschenswert sein, die Flächendichte explizit zu ermitteln. Beispielsweise kann hierdurch festgestellt werden, in welchen Teilen des Bearbeitungsbereichs möglicherweise eine schlechtere Bodenqualität dazu führt, dass dort eine geringere Flächendichte vorzufinden ist. Diese Erkenntnis könnte zukünftig genutzt werden, um einen entsprechende Bereich stärker zu düngen als andere Bereiche. Auch andere Maßnahmen sind als Reaktion auf festgestellte Unterschiede in der Flächendichte denkbar.

Durch die Erfindung wird außerdem eine Mähmaschine zum Einsatz bei einem erfindungsgemäßen Verfahren zur Verfügung gestellt. Die Mähmaschine weist wenigstens ein Mähwerk zum Mähen von Erntegut auf, wobei sie dazu eingerichtet ist, innerhalb eines Bearbeitungsbereichs Erntegut mittels des wenigstens einen Mähwerks zu mähen und für jede Position einer Mehrzahl von Positionen innerhalb des Bearbeitungsbereichs wenigstens ein Mähparameter zu ermitteln, wobei wenigstens ein Mähparameter ein Mähwerk-Parameter ist, der wenigstens ein Mähwerk betrifft und der im Zusammenhang mit einer Flächendichte des Erntegutes steht. Bevorzugt weist wenigstens ein Mähwerk eine Mäheinheit zum Mähen von Erntegut auf sowie einen Aufbereiter zum Aufbereiten von Erntegut, und der wenigstens eine Mähwerk-Parameter betrifft den Aufbereiter.

Weitere bevorzugte Ausführungsformen der erfindungsgemäßen Mähmaschine entsprechen denen des erfindungsgemäßen Verfahrens. Insbesondere kann die Mähmaschine dazu eingerichtet sein, zur Bestimmung eines Mähwerk-Parameters eine Vibrationsbewegung wenigstens eines Elements des Aufbereiters sensorisch zu erfassen. Dabei kann das Mähwerk einen Beschleunigungssensor aufweisen, der dazu eingerichtet ist, eine der Vibrationsbewegung zugeordnete Beschleunigung zu erfassen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine schematische Draufsicht einer erfindungsgemäßen Mähmaschine sowie einer Werbemaschine;
- Fig. 2: eine schematische Draufsicht eines Bearbeitungsbereichs mit der Mähmaschine und der Werbemaschine aus Fig.1; sowie
- Fig. 3: ein Flussdiagramm eines erfindungsgemäßen Verfahrens.

Fig. zeigt eine erfindungsgemäße Mähmaschine 10, welche in diesem Fall durch einen ersten Schlepper 11 mit einem frontseitig daran angebauten Mähwerk 15 gebildet ist. Der erste Schlepper 11 weist eine erste Kontrolleinheit 12 auf sowie eine erste drahtlose Kommunikationsschnittstelle 13. Das Mähwerk 15 weist eine Mäheinheit 16 auf, die auch als Mähbalken bezeichnet werden kann. Sie weist eine Mehrzahl von drehbar antreibbaren Mähscheiben 17 auf. Diese sind über eine Mäheinheit-Antriebswelle 27 mit einem Verteilergetriebe 25 verbunden, das wiederum mit einer nicht dargestellten Zapfwelle des Schleppers 11 verbunden ist. Die Mäheinheit 16 ist dazu eingerichtet, Erntegut, zum Beispiel Halmgut, aus einem Bestand 2 zu mähen, wobei jede Pflanze des Bestands geschnitten wird, so dass ein Teil mit der Wurzel im Boden verbleibt. Weiterhin weist das Mähwerk 15 einen Aufbereiter 20 auf, welcher in diesem Fall als Zinkenaufbereiter ausgebildet ist. Eine Mehrzahl von Zinken (ohne Bezugszeichen) ist mit einer Aufbereiterwelle 21 verbunden, die über zwei Lager 22 um eine Wellenachse W drehbar gelagert ist. Die Aufbereiterwelle 21 wird über eine Aufbereiter-Antriebswelle 26 angetrieben, die ebenfalls mit dem Verteilergetriebe 25 verbunden ist. Während des Betriebs der Mähmaschine 10 kann eine Aufbereiter-Drehzahl n_{M} der Aufbereiterwelle 21 zumindest teilweise unabhängig von einer Mähmaschinen-Fahrgeschwindigkeit vm der Mähmaschine 10 eingestellt werden. Somit kann ein Verhältnis zwischen der Aufbereiter-Drehzahl n_{M} und der Mähmaschinen-Fahrgeschwindigkeit vnn eingestellt werden. Die entsprechenden Einstellungen können von der ersten Kontrolleinheit 12 kontrolliert werden. Über einen hier nicht dargestellten Sensor kann ein Aufbereiter-Drehmoment M_{M} in der Aufbereiter-Antriebswelle 26 gemessen werden. Alternativ könnte auch eine Messung an der Aufbereiterwelle 21 selbst erfolgen. An dem der Aufbereiter-Antriebswelle 26 gegenüberliegenden Lager 22 ist ein Beschleunigungssensor 28 angeordnet, der eine Beschleunigung im Bereich des genannten Lagers 22 erfasst. Somit kann eine Vibrationsbewegung im Bereich des Lagers 22 überwacht werden. Der entsprechende Messwert wird von der Kontrolleinheit 12 empfangen. Diese bildet den Absolutbetrag und Mittel diesen über ein Zeitintervall, das beispielsweise zwischen 1 s und 5 s liegen kann. Hieraus ergibt sich ein Absolutmittelwert A. Des Weiteren kann die erste Kontrolleinheit 12 eine Mähmaschinen-Position P_{M} ermitteln, wozu sie unterschiedliche, nicht dargestellte Sensoren benutzen kann. Beispielsweise könnte die Mähmaschinen-Position PM mittels RTK (real time kinematic; Echtzeitkinematik) bestimmt werden, wobei einerseits GNSS genutzt wird und andererseits Signale einer terrestrischen Basisstation mit GNSS-Empfänger ausgewertet werden.

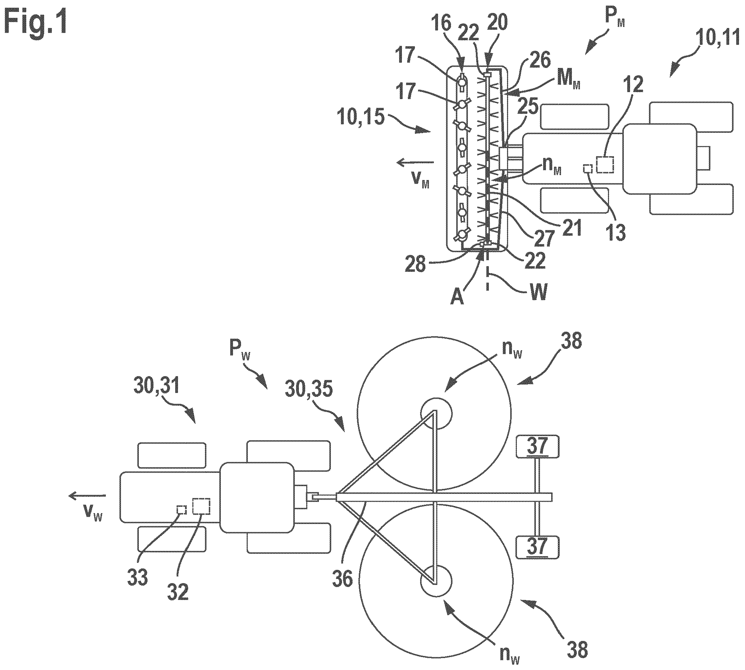

Des Weiteren ist in Fig.1 eine Werbemaschine 30 dargestellt, die in diesem Beispiel als Gespann aus einem zweiten Schlepper 31 und einem angehängten Schwader 35 ausgebildet ist. Der zweite Schlepper 31 weist eine zweite Kontrolleinheit 32 sowie eine zweite drahtlose Kommunikationsschnittstelle 33 auf. Letztere ist zur drahtlosen Kommunikation mit der ersten Kommunikationsschnittstelle 13 ausgebildet. Der Schwader 35 weist einen Rahmen 36 auf, der über ein Fahrwerk 37 abgestützt ist der Rahmen 36 weist zwei Auslegerarme (ohne Bezugszeichen) auf, an denen jeweils ein Rechkreisel 38 angeordnet ist. Der jeweilige Rechkreisel 38 bildet ein Bearbeitungsorgan des Schwaders 35, mit welchem am Boden liegendes Erntegut erfasst und derart in einem Ablagebereich abgelegt werden kann, dass sich ein nicht dargestellter Schwad bildet. Die Rechkreisel 38 sind rein schematisch dargestellt. Tatsächlich weist jeder Rechkreisel 38 eine Mehrzahl von Zinkenarmen auf, an denen wiederum Zinken befestigt sind. Im Betrieb ist eine Rechkreisel-Drehzahl nw wenigstens teilweise unabhängig von einer Werbemaschinen-Fahrgeschwindigkeit vw einstellbar, was über die zweite Kontrolleinheit 32 erfolgen kann. Somit ist ein Verhältnis R zwischen der Rechkreisel-Drehzahl nw und der Werbemaschinen-Fahrgeschwindigkeit vw einstellbar. Die zweite Kontrolleinheit 32 kann eine Werbemaschinen-Position Pw ermitteln, wozu wiederum unterschiedliche, nicht dargestellte Sensoren genutzt werden können.

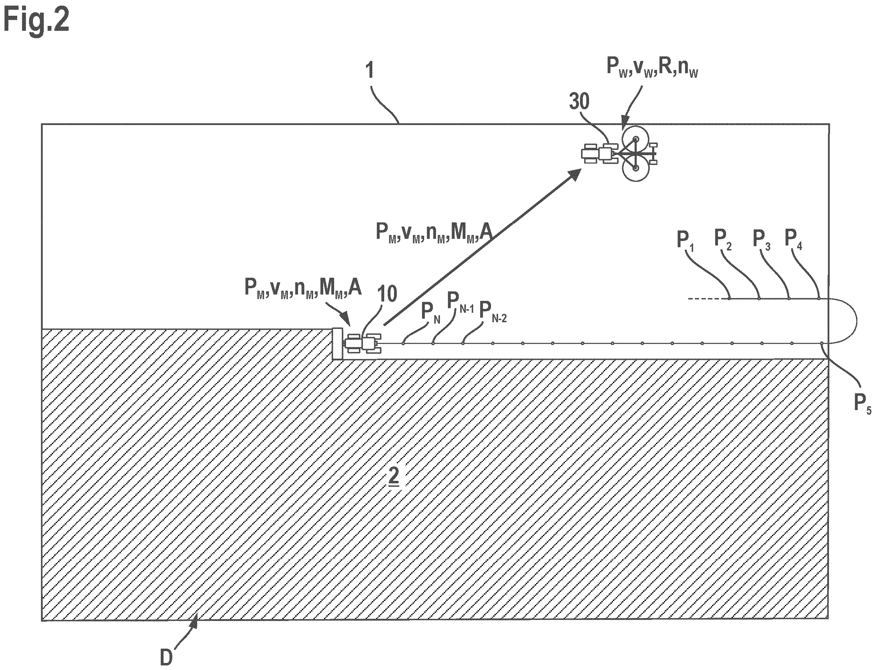

Bei der Bearbeitung eines Bearbeitungsbereichs 1, welcher in Fig. 2 schematisch dargestellt ist, mäht die Mähmaschine 10 nach und nach das Erntegut im Bestand 2, welcher eine im allgemeinen ortsabhängige, also nicht-konstante Flächendichte D aufweist. Die Mähmaschine 10 fährt dabei eine normalerweise im Voraus geplante Fahrroute ab, bei der sie nacheinander eine Mehrzahl von Positionen P₁-P_{N} durchfährt. Es versteht sich, dass in Fig. 2 aus Gründen der Übersichtlichkeit nur ein Teil der Fahrroute dargestellt ist und die dort markierte erste Position P₁ nicht den tatsächlichen Beginn der Fahrroute darstellt. Das mittels der Mäheinheit 16 geschnittene und mittels des Aufbereiters 20 gequetschte und/oder gebrochener Erntegut bleibt hinter der Mähmaschine 10 auf dem Boden liegen. Es wird in einem nachfolgenden Werbeprozess von der Werbemaschine 30 bearbeitet. Letztere fährt den von der Mähmaschine 10 bereits abgearbeiteten Teil des Bearbeitungsbereichs 1 ab, wobei sie die gleiche Fahrroute wie die Mähmaschine 10 oder eine andere Fahrroute verwenden kann. Um eine optimale Anpassung an die auch nach dem Mähen positionsabhängig unterschiedliche Flächendichte D zu erreichen, wertet die Werbemaschine 30 von der Mähmaschine 10 empfangene Informationen aus und nutzt diese, um ein optimales Verhältnis R einzustellen.

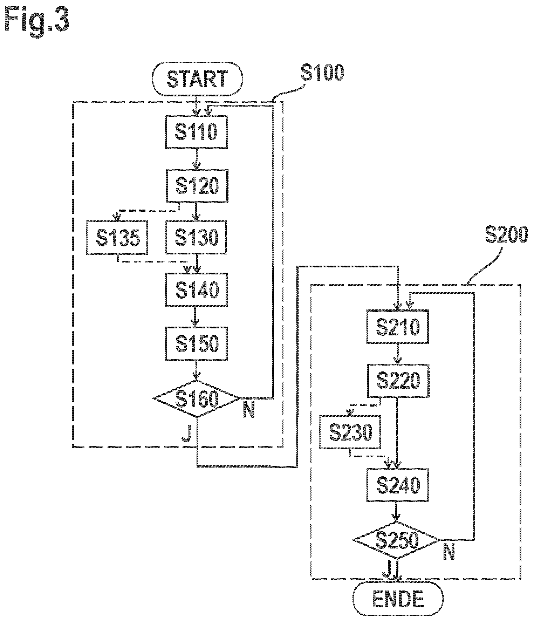

Ein Beispiel für ein erfindungsgemäßes Verfahren zur Feldbearbeitung wird nun mit Bezug auf das Flussdiagramm in Fig. 3 erläutert. Das Flussdiagramm zeigt einen Mähprozess S100, der von der Mähmaschine 10 ausgeführt wird, sowie einen nachfolgenden Werbeprozess S 200, der von der Werbemaschine 30 ausgeführt wird. Abweichend von dieser Darstellung ist es allerdings ausdrücklich möglich, dass sich der Mähprozess S100 und der Werbeprozess S200 zeitlich teilweise überschneiden. In einem ersten Schritt S 110 mäht die Mähmaschine 10 Erntegut, welches mittels des Aufbereiters 25 aufbereitet wird, und fährt dabei von einer Position P₁-P_{N} zur nächsten. In einem weiteren Schritt S120, der auch zeitlich parallel zum ersten Schritt S110 erfolgen kann, bestimmt die erste Kontrolleinheit 12 mehrere Mähparameter, nämlich die Mähmaschinen-Position Pnn, die Mähmaschinen-Fahrgeschwindigkeit vnn sowie die Aufbereiter-Drehzahl n_{M}. In einem weiteren Schritt S130 wird als weiterer Mähparameter der Absolutmittelwert A bestimmt. Alternativ hierzu könnte in einem Schritt S135 das Aufbereiter-Drehmoment M_{M} bestimmt werden. Der Absolutmittelwert A, das Aufbereiter-Drehmoment Mnn und die Aufbereiter-Drehzahl n_{M} stellen Mähwerk-Parameter dar, die das Mähwerk 15 betreffen.

Mithilfe der Mähmaschinen-Fahrgeschwindigkeit vnn, der Aufbereiter-Drehzahl n_{M} sowie entweder des absoluten Mittelwerts A oder des Aufbereiter-Drehmoments M_{M} wird in einem weiteren Schritt S140 die Flächendichte D für die aktuelle Position bestimmt. Hierzu kann eine in der Kontrolleinheit 12 hinterlegte Nachschlagetabelle genutzt werden, die mittels einer Messreihe anhand eines baugleichen Mähwerks 15 erstellt wurde. In einem weiteren Schritt S150 werden die aktuelle Mähmaschinen-Position Pnn, die Mähmaschinen-Geschwindigkeit vnn, die Aufbereiter-Drehzahl n_{M} sowie entweder der Absolutmittelwert A oder das Aufbereiter-Drehmoment MM mittels der ersten Kommunikationsschnittstelle 13 übermittelt. Die Übermittlung kann direkt von der zweiten Kommunikationsschnittstelle 33 empfangen werden. Zusätzlich oder alternativ kann auch ein weitere, nicht dargestellte Kommunikationsschnittstelle die genannten Werte empfangen. Diese kann zum Beispiel einem stationären Farmmanagementsystem zugeordnet sein, welches die Werte speichert. Optional kann auch die ermittelte Flächendichte D übermittelt werden.

In einem weiteren Schritt S160 wird überprüft, ob bereits die Fahrroute komplett durchfahren wurde, also ob die letzte Position P₁-P_{N} erreicht wurde. Falls nicht, kehrt das Verfahren zu Schritt S110 zurück. Falls doch, verlässt das Verfahren den Mähprozess S100 und tritt in den Werbeprozess S200 ein. In einem Schritt S210 bearbeitet die Werbemaschine 30 das auf dem Boden liegende Erntegut, während sie sich zur jeweils nächsten Position P₁-P_{N} bewegt. In einem weiteren Schritt S220, der auch zeitgleich mit dem vorgenannten Schritt S210 erfolgen kann, werden die Werbemaschinen-Position Pw und die Werbemaschinen-Geschwindigkeit vw bestimmt. Sofern seit dem Mähen ein nennenswerter Zeitraum verstrichen ist, kann in einem Schritt S230 ein Trocknungsprozess berücksichtigt werden, durch welchen sich die Flächendichte D zwischenzeitlich verringert haben kann. Danach werden in einem weiteren Schritt S240 als Werbeparameter ein optimales Verhältnis R und die sich hieraus ergebende Rechkreisel-Drehzahl nw bestimmt und eingestellt. In einem Schritt S260 wird geprüft, ob bereits die letzte Position P₁-P_{N} erreicht wurde. Falls nein, kehrt das Verfahren zu Schritt S210 zurück. Falls ja, endet das Verfahren.

In diesem Beispiel werden die Werbeparameter nw, R intern innerhalb der Werbemaschine 30 ermittelt. Es wäre auch möglich, dass diese extern zum Beispiel innerhalb des oben genannten Farmmanagementsystems oder innerhalb der Mähmaschine 10 ermittelt werden.

## Patentansprüche

1. Verfahren zur Feldbearbeitung, wobei eine Mähmaschine (10) innerhalb eines Bearbeitungsbereichs (1) Erntegut mittels wenigstens eines Mähwerks (15) mäht (S110), wobei für jede Position (P₁-P_{N}) einer Mehrzahl von Positionen (P₁-P_{N}) innerhalb des Bearbeitungsbereichs (1) wenigstens ein Mähparameter (A, M_{M}, n_{M}, vnn) ermittelt wird (S120), wobei wenigstens ein Mähparameter (A, M_{M}, n_{M}, v_{M}) ein Mähwerk-Parameter (A, M_{M}, nnn) ist, der wenigstens ein Mähwerk (15) betrifft und der im Zusammenhang mit einer Flächendichte (D) des Erntegutes steht,
**dadurch gekennzeichnet, dass**
eine Werbemaschine (30) das gemähte Erntegut zeitlich nachfolgend mit wenigstens einem Bearbeitungsorgan (38) bearbeitet (S210), wobei wenigstens ein Werbeparameter (R, nw, vw), der den Betrieb der Werbemaschine charakterisiert, in Abhängigkeit von einer Position (P₁-P_{N}) der Werbemaschine (30) und dem für diese Position (P₁-P_{N}) ermittelten wenigstens einen Mähparameter (A, M_{M}, n_{M}, vnn) eingestellt wird (S240).

2. Verfahren nach Anspruch 1, **dadurch gekennzeichnet, dass** wenigstens ein Werbeparameter (R, nw, vw) in Zusammenhang mit einer Antriebsgeschwindigkeit (nw) eines Bearbeitungsorgans (38) und/oder einer Werbe-Fahrgeschwindigkeit (vw) der Werbemaschine (30) steht.

3. Verfahren nach einem der vorangehenden Ansprüche, **dadurch gekennzeichnet, dass** ein Werbeparameter (R, nw, vw) einem Verhältnis (R) zwischen der Antriebsgeschwindigkeit (n_{M}) eines Bearbeitungsorgans und der Werbe-Fahrgeschwindigkeit (vw,) entspricht.

4. Verfahren nach einem der vorangehenden Ansprüche, **dadurch gekennzeichnet, dass** die Werbemaschine (30) als Bearbeitungsorgan (38) wenigstens einen Rechkreisel aufweist, welcher mit einer Kreiseldrehzahl als Antriebsgeschwindigkeit (nw) betrieben wird.

5. Verfahren nach einem der vorangehenden Ansprüche, **dadurch gekennzeichnet, dass** zusätzlich zu dem wenigstens einen Mähwerk-Parameter (A, M_{M}, nnn) eine Mähmaschinen-Fahrgeschwindigkeit (vnn) der Mähmaschine (10) als Mähparameter (A, M_{M}, n_{M}, vnn) ermittelt wird und der wenigstens eine Werbeparameter (R, n_{W}, v_{W}) in Abhängigkeit von der für die jeweilige Position (P₁-P_{N}) ermittelten Mähmaschinen-Fahrgeschwindigkeit (vnn) ermittelt wird.

6. Verfahren nach einem der vorangehenden Ansprüche, **dadurch gekennzeichnet, dass** bei der Bestimmung des Werbeparameters (R, nw, vw) ein zwischen dem Mähen und dem Werben erfolgter Trocknungsprozess berücksichtigt wird (S230).

7. Verfahren dem Oberbegriff von Anspruch 1 oder nach einem der vorangehenden Ansprüche, **dadurch gekennzeichnet, dass** wenigstens ein Mähwerk (15) mit einer Mäheinheit (16) das Erntegut mäht, es mit einem Aufbereiter (20) aufbereitet und nach der Aufbereitung wieder ablegt, wobei der wenigstens eine Mähwerk-Parameter (A, M_{M}, n_{M}) den Aufbereiter (20) betrifft.

8. Verfahren nach einem der vorangehenden Ansprüche, **dadurch gekennzeichnet, dass** ein Mähwerk-Parameter (A, M_{M}, nnn) in Zusammenhang mit einer Leistungsaufnahme des Aufbereiters (20) steht, wobei bevorzugt zur Bestimmung dieses Mähwerk-Parameters (A, M_{M}, n_{M}) ein Drehmoment (M_{M}) einer Antriebswelle (26) des Aufbereiters (20) gemessen wird.

9. Verfahren nach einem der vorangehenden Ansprüche, **dadurch gekennzeichnet, dass** zur Bestimmung eines Mähwerk-Parameters (A, M_{M}, n_{M}) eine Antriebsgeschwindigkeit (n_{M}) des Aufbereiters (20) erfasst wird.

10. Verfahren nach einem der vorangehenden Ansprüche, **dadurch gekennzeichnet, dass** zur Bestimmung eines Mähwerk-Parameters (A, M_{M}, n_{M}) eine Vibrationsbewegung wenigstens eines Elements des Aufbereiters (20) sensorisch erfasst wird.

11. Verfahren nach einem der vorangehenden Ansprüche, **dadurch gekennzeichnet, dass** ein Mähwerk-Parameter (A, M_{M}, nnn) wenigstens teilweise basierend auf einer der Vibrationsbewegung zugeordneten Beschleunigung bestimmt wird.

12. Verfahren nach einem der vorangehenden Ansprüche, **dadurch gekennzeichnet, dass** die Beschleunigung im Bereich eines Lagers (22) einer drehbar angetriebenen Aufbereiterwelle (21) gemessen wird, wobei bevorzugt die Beschleunigung senkrecht zu einer Wellenachse (W) der Aufbereiterwelle (21) gemessen wird.

13. Verfahren nach einem der vorangehenden Ansprüche, **dadurch gekennzeichnet, dass** wenigstens ein Mähwerk-Parameter (A, M_{M}, nnn) basierend auf einer zeitlichen Mittelung bestimmt wird, wobei er bevorzugt einem zeitlich gemittelten Absolutbetrag der Beschleunigung entspricht.

14. Verfahren nach einem der vorangehenden Ansprüche, **dadurch gekennzeichnet, dass** der wenigstens eine Mähparameter (A, M_{M}, n_{M}, vnn) genutzt wird, um eine positionsabhängige Flächendichte (D) des Ernteguts innerhalb des Bearbeitungsbereichs (1) zu bestimmen.

15. Mähmaschine (10) zum Einsatz bei einem Verfahren nach einem der vorangehenden Ansprüche, mit wenigstens einem Mähwerk (15) zum Mähen von Erntegut, wobei die Mähmaschine (10) dazu eingerichtet ist, innerhalb eines Bearbeitungsbereichs (1) Erntegut mittels des wenigstens einen Mähwerks (15) zu mähen und für jede Position einer Mehrzahl von Positionen innerhalb des Bearbeitungsbereichs wenigstens ein Mähparameter (A, M_{M}, n_{M}, v_{M}) zu ermitteln, wobei wenigstens ein Mähparameter (A, M_{M}, n_{M}, v_{M}) ein Mähwerk-Parameter (A, M_{M}, n_{M}) ist, der wenigstens ein Mähwerk (15) betrifft und der im Zusammenhang mit einer Flächendichte (D) des Erntegutes steht, wobei bevorzugt wenigstens ein Mähwerk (15) eine Mäheinheit (16) zum Mähen von Erntegut aufweist sowie einen Aufbereiter (20) zum Aufbereiten von Erntegut, und der wenigstens eine Mähwerk-Parameter (A, M_{M}, nnn) den Aufbereiter (20) betrifft.
